Europäisches Patentamt

European Patent Office

Office européen des brevets

(19)

(11) Veröffentlichungsnummer: **0 003 247**
**B1**

(12) **EUROPÄISCHE PATENTSCHRIFT**

(21) Anmeldenummer: 78200395.8

(22) Anmeldetag: **28.12.78**

(51) Int. Cl.³: **C 03 B 5/02, C 03 B 3/00**

---

(54) Glasschmelzofen.

---

(30) Priorität: **12.01.78 DE 2801117**

(43) Veröffentlichungstag der Anmeldung:
**08.08.79 Patentblatt 79/16**

(45) Bekanntmachung des Hinweises auf die Patenterteilung:
**11.03.81 Patentblatt 81/10**

(84) Benannte Vertragsstaaten:
**BE CH FR GB IT NL SE**

(56) Entgegenhaltungen:
DE - A - 2 453 057
US - A - 3 964 892
US - A - 4 036 625

(73) Patentinhaber: **Sorg GmbH & Co. KG**
**Im Aller 23**
**D-8770 Lohr/Main (DE)**

(72) Erfinder: **Pieper, Helmut, Dipl.-Ing.**
**Buchenstrasse 19**
**D-8770 Lohr/Main (DE)**

(74) Vertreter: **Schulze Horn, Stefan, Dipl.-Ing. et al,**
**Goldstrasse 36**
**D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Glasschmelzofen

Die Erfindung betrifft einen Glasschmelzofen, insbesondere voll elektrisch beheizten Glasschmelzofen, mit einer Wandung aus feuerfestem Material, die kreisförmig ist oder die Form eines regelmäßigen Vielecks aufweist und bei welchem außen ein Stützgerüst vorhanden ist, mit einer Decke aus feuerfestem Material und mit Fördermitteln zur Eingabe des Gemenges in einen auf der Decke angeordneten Trichter und Fördermitteln zur gesteuerten Eingabe des Gemenges von diesem Trichter in eine Öffnung in der Decke.

Vollelektrisch beheizte Glasschmelzöfen sind bekannt und haben sich gut bewährt. Ihre Vorteile liegen nicht nur in einer besseren Energieausnutzung als dies bei konventionellen Öfen der Fall ist, sie können auch Glas mit besseren Qualitäten erschmelzen als konventionelle Öfen und sie weisen insbesondere geringere Abgasmengen als bei öl- oder gasgefeuerten Öfen auf, da bei diesen Öfen auch noch die Brennabgase zur Abgasmenge beitragen. Weiterhin ist ihr Aufbau unkompliziert und führt zu vergleichsweise geringen Abmessungen.

Bei einem vollelektrisch beheizten Glasschmelzofen der eingangs genannten Art siche DE-A-2453057 ist es zwar bereits möglich das Gemenge durch eine Schlitz in der Decke über den Radius verteilt gesteuert einzugeben, das Gemenge wird aber auf einer feststehenden Linie abgeworfen und muß durch einen Streicharm auf der gesamten Badoberfläche verteilt werden. Es hat sich herausgestellt, daß diese Verteilung eine gleichmäßige Bedeckung der Badoberfläche mit Gemenge nicht ermöglicht und die Schmelze teilweise nicht mit Gemenge bedeckt wird. Die Folge davon ist, daß zu viel Wärme abgestrahlt wird. Nachteilig ist bei den bekannten Öfen weiterhin, daß ein Schlitz vorhanden ist, welcher nicht abgeschlossen werden kann und daher die beim Aufschmelzen des Gemenges entstehenden Abgase nicht oder nur mit Schwierigkeiten gesammelt und über Filteranlagen in die Atmosphäre abgeleitet werden können. Dadurch, daß die Decke nicht geschlossen ist, wird weiterhin der Wärmeverbrauch eines solchen Ofens unnötig erhöht.

Nachteilig ist auch bei anderen bekannten Öfen, bei welchen das Gemenge gleichmäßig über eine nach oben geöffnete Fläche eingegeben wird, daß die verwendeten Eingabevorrichtungen aufwendig und kompliziert sind. Dabei wird über jeder Stelle der Ofenfläche eine bestimmte Menge des Gemenges abgeworfen. Hierbei ist nicht nur der Mechanismus des gesteuerten Anfahrens jeder einzelnen Stelle kompliziert, auch die Steuerung der abgeworfenen Menge kann mechanisch nur unvollkommen geschehen. Die genannten Nachteile hinsichtlich der Abführung der auftretenden Gase und des Wärmeverbrauchs bestehen natürlich auch bei diesen Öfen. Das freiliegende Gemenge kann weiterhin bei bestimmten Gemengen zu ungünstigen vertikalen Temperaturverteilungen führen.

Es ist demgegenüber Aufgabe der Erfindung, einen neuartigen Glasschmelzofen, insbesondere vollelektrisch beheizten Glasschmelzofen zu schaffen, bei welchem die vorgenannten Nachteile nicht mehr auftreten und bei dem die obere Ofenfläche vollständig von einer Hänge-Decke abgedeckt ist, ohne daß dadurch die gleichmäßige Aufgabe des Gemenges auf die Oberfläche behindert würde.

Die Hänge-Decke des Ofens soll weiterhin geschlossen sein, um die beim Aufschmelzen des Gemenges entstehenden Gase abführen zu können, die Isolation soll genügend sein, um unnötige Wärmeverluste zu verhindern, die Temperatur des Oberofens soll je nach den Schmelzerfordernissen einstellbar sein, der Aufbau der Decke soll wirtschaftlich möglich, schnell und leicht sein und die in der Hänge-Decke vorhandenen Fördermittel sollen eine gezielte bzw. vorgegeben verschiedene Belegung der gesamten vorzugsweise kreisförmigen Ofenfläche ermöglichen. Auf jeden Punkt der Gemengefläche soll also eine gewünschte Menge des Gemenges aufgegeben werden können.

Diese Aufgabe wird erfindungsgemäß gelöst durch eine Decke, die von darüber liegenden Bindern oder Trägern getragen wird und auf einer ringförmigen Fahrschiene laufende Räder aufweist, über welche die Decke in einer horizontalen Ebene drehbar ist und auf der Decke ein Bunker zur Gemengeaufnahme vorhanden ist und daß in dem feuerfesten Material der Decke als Öffnung ein an sich bekannter Schlitz oder statt des Schlitzes mehrere in verschiedenen radialen Abständen von der Drehachse angeordnete Öffnungen angeordnet sind.

Weitere vorteilhafte Ausgestaltungen ergeben sich aus den Unteransprüchen 2 bis 9 und 10 bis 17.

Im folgenden werden Ausführungsbeispiele der Erfindung anhand von Zeichnungen näher beschrieben. Es zeigen:

Figur 1 die Aufsicht auf einen Glasschmelzofen gemäß der Erfindung.

Figur 2 einen Vertikalschnitt durch den oberen Bereich des Ofens gemäß Figur 1,

Figur 3 eine Aufsicht gemäß Figur 1 mitt einer anderen Ausgestaltung der Fördermittel mit radial einstellbarem Abwerfpunkt,

Figur 4 eine Aufsicht auf einen Ofen gemäß der Erfindung mit einer weiteren, anderen Ausgestaltung der Förder- und Bunkermittel und

Figur 5 einen vertikalen Schnitt durch den oberen Teil des Ofens gemäß Figur 4.

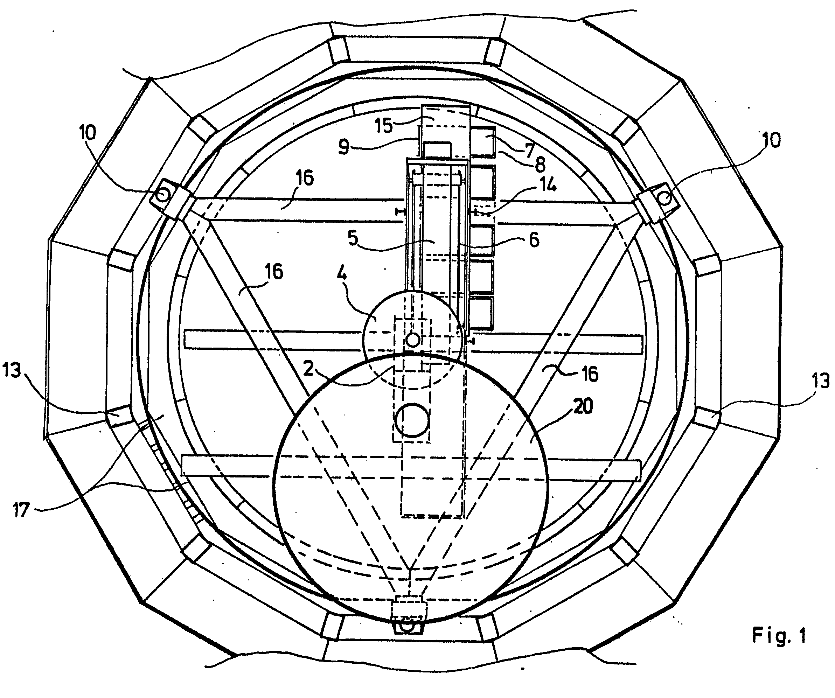

Gemäß den Figuren 1 bis 3 besteht ein beispielhaft angegebener Ofen aus einer Ofenwandung 19, welche die Form eines ganzzahligen Vielecks hat. Oberhalb der Gemengeschicht ist eine Decke 18 aus feuerfestem Material angeordnet, welche über weitere Zwischenträger von drei in einem Dreieck angeordneten Trägern 16 gehalten wird. Diese Halterung erfolgt nach Art der abgehängten Decken. Die Decke selbst besteht dabei aus an Ankern 36 hängenden Steinen 37 aus feuerfestem Material. Die Wandung 19 des Ofens ist außen mit einem Stützgerüst 13 versehen, welches oben eine ringförmige Fahrschiene 17 trägt. Räder oder Rollen 10 lassen eine Drehbewegung der dreieckig angeordneten Träger 16 auf der ringförmigen Fahrschiene 17 zu, wobei durch geeignete Antriebsmotoren mindestens eines, vorteilhaft aber alle drei Räder 10 an den drei Ecken angetrieben sind.

Das Stützgerüst 13 trägt in seiner weiteren Ausgestaltung weiterhin einen Hauptgemengebunker 20, an dessen unteren Ende ein Flachschieber 11 vorhanden ist, der über einen staubdichten Trichter mit einer Dosier-Vibrations-Rinne 1 vorhanden ist.

Über das Stützgerüst 13 sind der Hauptgemengebunker 20 sowie die Teile 11, 1 und 2, ortsfest und der Abwurfpunkt der Vibrationsrinne 1 sitzt oberhalb der oberen Öffnung eines zentral und konzentrisch auf der Drehdecke 18 angebrachten Trichters 4, der aber einen exzentrischen Auslaß besitzt, d.h. der unten angeordnete Auslaß ist von der Mittelachse der Drehdecke und des Trichters 4 gesehen versetzt. Dadurch ist es möglich, eine zentrale Stromzuführung 3 konzentrisch zur Mittelachse der Drehdecke anzuordnen, ohne daß die Auslaßöffnung des Trichters 4 dadurch im Querschnitt verringert würde bzw. ein darunter befindliches Fördermittel in einer Verschiebebewegung behindert würde. Über die zentrale Stromversorgung werden alle Antriebe der Drehdecke versorgt.

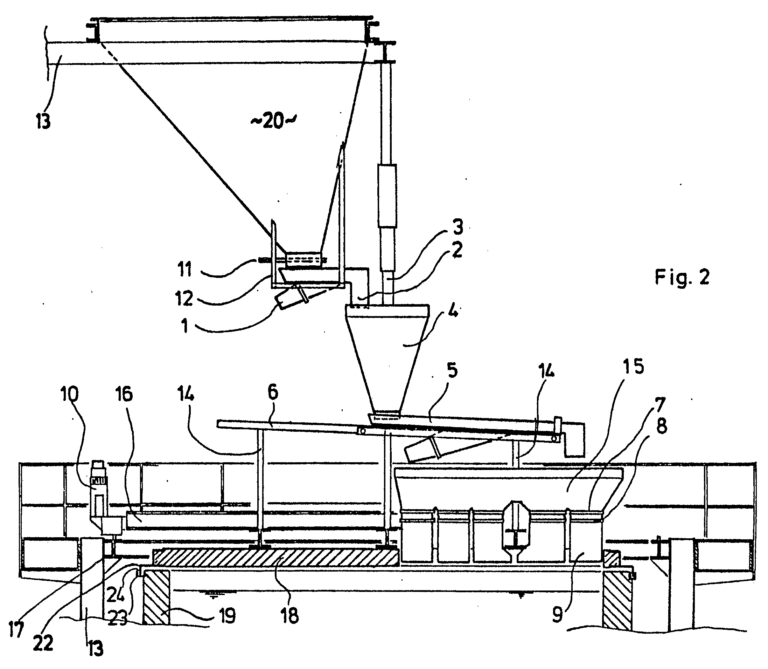

Unterhalb des dezentralen oder exzentrisch angeordneten Auslasses des Trichters 4 ist eine radial verfahrbare Verteilerrinne 5 angeordnet, die ebenfalls eine Vibrationsrinne oder eine Dosierschnecke ist. Die Vibrationsrinne oder Schnecke 5 besitzt eine Anzahl von Rädern, welche in einem Rahmen 6 längs verfahrbar sind. Der Rahmen kann gegenüber der Drehdecke geneigt sein und da der Trichter 4 und der Rahmen 6 drehdeckenfest sind, bleibt die betriebliche Verbindung und die Richtung der Rinne im Verhältnis zur Decke auch beim Drehen der gesamten Decke erhalten und beim Längsfahren wird lediglich der Abwurfpunkt radial vor und zurück verschoben (Figur 1 und 2).

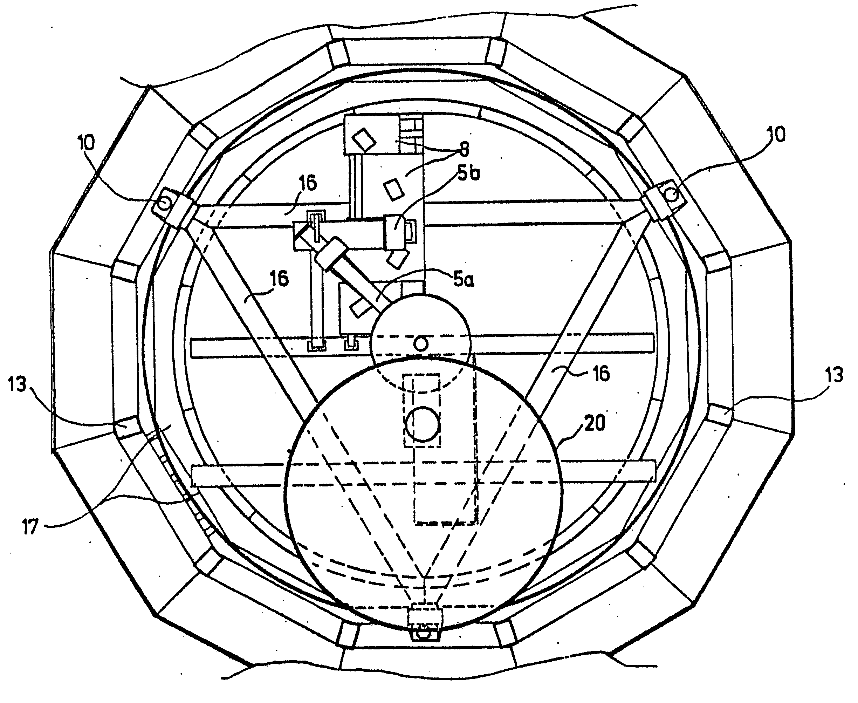

Gemäß Figur 3 ist aber auch eine Ausgestaltung derart möglich, daß die Öffnungen und die ihnen zugeordneten Wannenvorbunker 15 auf einem sich radial erstreckenden Kreisbogensegment angeordnet sind, wobei vom Mittelpunkt des Segmentes aus eine in einer Horizontalebene verschwenkbare Vibrationsrinne 5b zu den Bunkern 15 führt. Auf den drehdeckenfesten End-Drehpunkt der Rinne 5b wirft ein Vibrationsrohr 5a ab, auf dessen anderes Ende das Gemenge durch den Trichter 4 aufgegeben wird. Die Rinne 5b selbst kann nach entsprechender Verschwenkung in jeden der Bunker 15 abwerfen.

Da der Trichter 4 mit seiner oberen Öffnung konzentrisch zur Drehdecke und fest mit dieser verbunden angeordnet ist, ist seine Drehbewegung hinsichtlich des Abwurfpunktes der Dosier-Vibrations-Rinne 1 unerheblich, da dieser innerhalb des gleichen Umfangstreifens des Trichters 4 verläuft.

Auf der Decke sind unterhalb der Bewegungsbahn des Abwurfpunktes der Zwischenfördermittel die Wannenvorbunker 15 mit einem gemeinsamen, länglichen Einlauf versehen, wodurch die Bunker 15 durch die Fördermittel 5 oder 5a-b unabhängig von einer Drehbewegung der Drehdecke und ihrer Lage nach Bedarf aufgefüllt werden können.

Unterhalb der Wannenvorbunker 15 sind jeweils ein Flachschieber 7 angeordnet, die über staubfreie Trichter 8 mit fünf Beschickungs-Vibrationsrinnen 9 verbunden sind. Diese Vibrationsrinnen 9 für die Gemengeaufgabe durch die Drehdecke sind in einer Richtung senkrecht zur Bewegungsrichtung der Vibrationsrinne 5 angeordnet, sitzen direkt über einem Schlitz in der Drehdecke und werden einzeln derart gesteuert, daß bei einer Drehbewegung der Decke eine gezielte Bedeckung der Badoberfläche eingestellt wird. Es kann also eine Einstellung erfolgen, so daß die außen sitzenden Vibrationsrinnen 9 in einem Verhältnis mehr fördern, wie ihr Weg über der Gemengeschicht größer ist, als der Weg der innen liegenden Vibrationsrinnen 9. Das Verhältnis der Fördermengen entspricht dann den Verhältnissen der Wege der Abwurfpunkte der Vibrationsrinnen 9.

Es kann jedoch auch die Förderleistung der Rinnen 9 so eingestellt sein, daß ein Gemengeprofil aufgelegt wird, welches dem Energieprofil über den Elektroden entspricht, so daß vorzugsweise die Rinne, welche über den Elektrodenenden angeordnet ist, mehr fördert als es ihrer Wegstrecke entspricht.

Des weiteren kann die Leistung aller oder einzelner Rinnen auch während der Drehbewegung variiert werden. Dadurch ist es möglich, die in Abhängigkeit von dem Ofenzustand sowohl in den Ringzonen als auch punktuell jeweils optimalste Gemengebedeckung zu erreichen. Die entsprechenden Daten können dabei von dem Bedienungspersonal oder einem Rechner vorgegeben werden.

Zur Abdichtung der Drehdecke 18 mit dem Feuerfestmaterial trägt dieses an seinem Außenrand eine ringförmige Schürze 22, die mit einem Dichtrand 23 an oder in der Krone der Außenwandung 19 zusammenwirkt. Der Dichtrand 23 weist U-Form auf und ist mit einem fließ- oder rieselfähigem Dichtmittel 24 gefüllt und in dieses Dichtmittel greift ein vertikal verlaufender Rand der Schürze 22 ein. Das Dichtmittel kann Sand oder ein anderer körniger Stoff sein, zur Erzielung einer absoluten Dampfdichtheit kann aber auch ein hochwärmebeständiges Öl, Bitumen, Parafin oder dergleichen Verwendung finden. Die hierfür benötigten Temperaturen können leicht eingestellt werden, wenn zwischen dem Dichtrand und dem Feuerfestmaterial der Wandung 19 Isolationsschichten angeordnet sind.

Ersichtlicherweise ermöglicht die erfindungsgemäße Drehdecke es nicht nur, den Ofen nach oben geschlossen zu halten, sondern mit technisch einfachen und störungsfrei arbeitenden Standardausrüstungsteilen von Glasschmelzöfen ist es auch möglich, eine genaue, gleichmäßige oder gewünscht ungleichmäßige, sogar assymmetrische Aufgabe des Gemenges auf die auf dem Glasbad vorhandene Gemengeschicht zu erreichen.

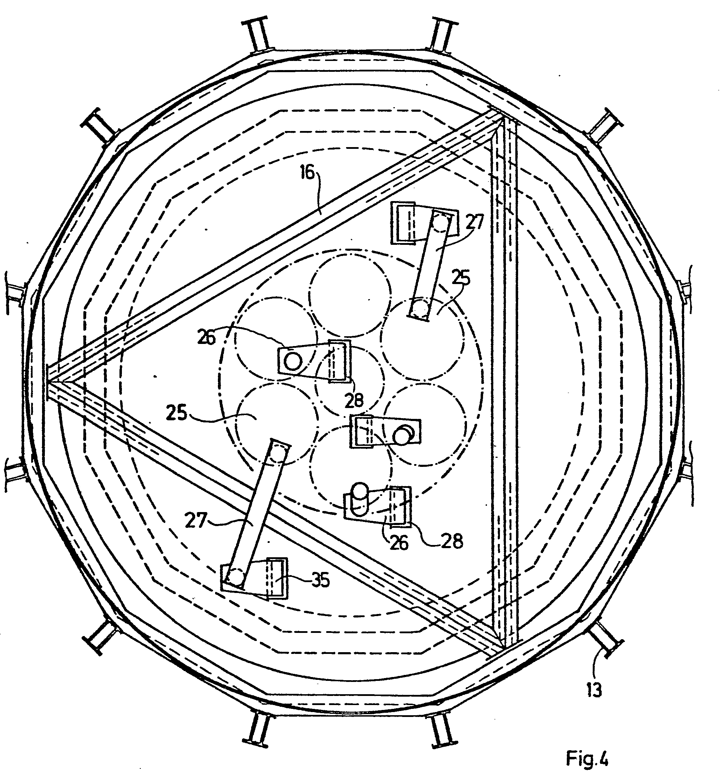

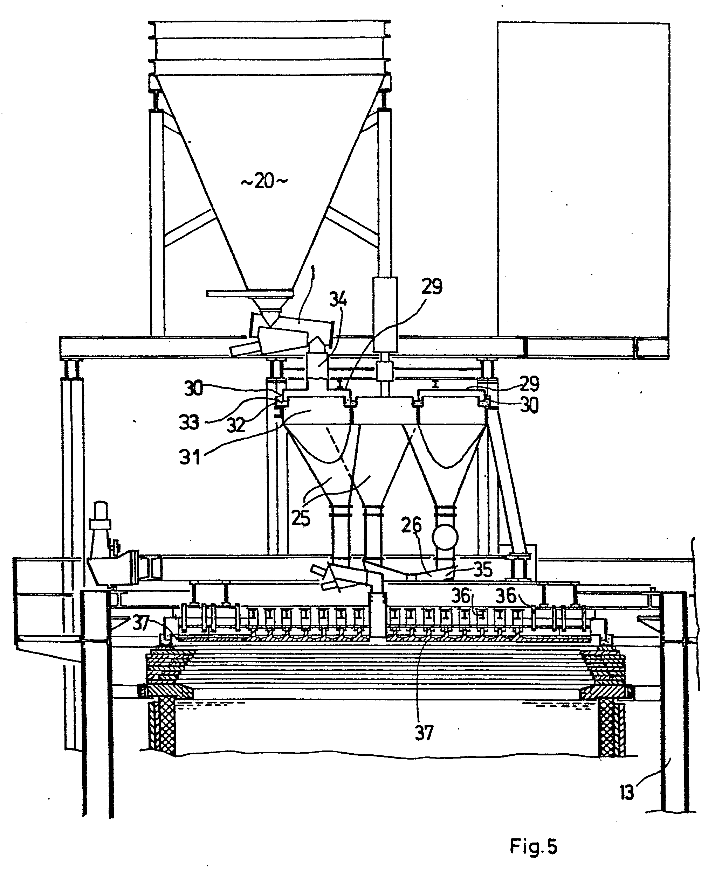

Gemäß den Figuren 4 und 5 kann die Drehdecke auch derart ausgestaltet sein, daß nicht ein konzentrischer Trichter drehdeckenfest angeordnet ist, sondern daß in einem konzentrisch zur Drehachse der Decke liegenden Kreis eine Anzahl von Trichtern 25 angeordnet ist, deren obere Öffnungen sich unterhalb des Abwurfpunktes des Fördermittels 1 bzw. der entsprechenden Vibrationsrinne hindurch drehen. Bei einer Drehung der Decke können also nacheinander sämtliche Trichter 25 in Abhängigkeit eines nichtgezeigten Füllstandsmessers in der gewünschten Weise gefüllt werden, wobei sich während der Füllung die Drehdecke entweder im Ruhezustand befindet oder sich weiterdrehen kann, solange sichergestellt wird, daß der Abwurfpunkt des Fördermittels 1 oberhalb der oberen Öffnung des jeweils zu füllenden Trichters 25 liegt.

Von den unteren Öffnungen der Trichter 25 gelangt jetzt das Gemenge über fest eingestellte Fördermittel zu den verschiedenen Öffnungen 28 in der Drehdecke, so daß verschwenkbare oder verfahrbare Fördermittel nicht mehr benötigt werden. Die Beschickung kann jetzt allein in Abhängigkeit von Füllstandsmessungen in den Wannenvorbunkern bzw. direkt nach Programm erfolgen, so daß mechanische Störungen ausgeschlossen sind.

Je nach Entfernung der unteren Öffnungen der Trichter 25 zu den Öffnungen 28 in der Drehdecke kann als Fördermittel entweder eine abgedeckte Vibrationsrinne 26 dienen oder über Vibrationsrohre 27 wird das Gemenge von den Trichtern 25 zu den Vibrationsrinnen 26 geleitet.

Die jeweilige Beschickungsmenge für jede der Öffnungen 28 je nach Stellung der Drehdecke bzw. während einer Umdrehung kann jetzt über die Betätigung der Vibrationsrinnen 26 bzw. -rohre 27, insbesondere deren Arbeitszeit eingestellt werden.

Die Öffnungen 28 in der Drehdecke 18 sind rechteckig und von solcher Breite, daß sie in ihrer Gesamtheit die gesamte radiale Deckenerstreckung überdecken. Im einzelnen stößt also der vom Rand jeder Öffnung beschriebene Kreis an den vom Rand jeder benachbarten Öffnung beschriebenen Kreis an.

Zur weiteren Verbesserung der Dosierung ist für den Fachmann selbstverständlich neben der Zeitsteuerung jeder der dosierenden Vibrationsrinnen auch noch eine Mengensteuerung über deren Schwingungen möglich.

Um zu vermeiden, daß das zentrale Fördermittel 1 bzw. die entsprechende Vibrationsrinne, welche über ein Fallrohr 34 die Füllung der Trichter 25 vornimmt, in den Zwischenraum zwischen die einzelnen Trichter 25 abwerfen könnten, sind diese an ihrer oberen Öffnung nach oben hin mit einem gemeinsamen Füllring 31 versehen, der seinerseits von einem mit dem Stützgerüst verbundenen Deckel 29 nach oben abgeschlossen ist. Es besteht also eine Dreh-Relativbewegung zwischen dem Deckel 29 und dem Füllring 21, so daß Dichtungen zwischen diesen beiden Teilen zur Aufnahme dieser Bewegung geeignet sein müssen. Da der Deckel 29 stützgerüstfest ist, ist es möglich, zwischen der Vibrationsrinne 1 und dem Deckel 29 ein Fallrohr 34 anzuordnen, der eine staub- und gasdichte Zuführung des Gemenges in die Trichter 25 ermöglicht.

Da weiterhin die Vibrationsrinnen 26 und die Öffnungen 28 mit passenden Abdeckungen versehen sind, ist damit eine staub- und gasdichte Förderung des Gemenges von dem Hauptgemengebunker 20 bis zu dem Raum unterhalb der Drehdecke 18 gewährleistet.

Die Dichtung zwischen dem Deckel 29 und dem Füllring 31 entspricht derjenigen zwischen der Drehdecke und dem Stützgerüst 13; in einen Randkanal 32 des Füllrings 31, der beidseitig des Füllrings 31 angeordnet und mit einem fließ- oder reiselfähigem, wärmebeständigem Material 33 gefüllt ist, ragt der Unterrand von an dem Deckel 29 befestigten und nach unten weisenden Stegen 30 hinein.

Da die erfindungsgemäße Drehdecke also höchste Funktionssicherheit mit optimaler Möglichkeit der Gemengedosierung sowie der gasdichten Abschließung des Ofenoberraumes und der Gemengezuführung verbindet, kann von einer idealen Lösung der anstehenden Probleme gesprochen werden.

### Patentansprüche

1. Glasschmelzofen, insbesondere voll elektrisch beheizter Glasschmelzofen, mit einer Wandung (19) aus feuerfestem Material, die kreisförmig ist oder die Form eines regelmäßigen Vielecks aufweist und bei welchem außen ein Stützgerüst (13) vorhanden ist, mit einer Decke (18) aus feuerfestem Material und mit Fördermitteln (1) zur Eingabe des Gemenges in einen auf der Decke (18) angeordneten Trichter (4) und Fördermitteln (5) zur gesteuerten Eingabe des Gemenges von diesem Trichter (4) in eine Öffnung in der Decke (18), dadurch gekennzeichnet, daß die Decke (18) von darüber liegenden Bindern oder Trägern (16) getragen wird und auf einer ringförmigen Fahrschiene (17) laufende Räder (10) aufweist, über welche die Decke (18) in einer horizontalen Ebene drehbar ist und auf der Decke (18) ein Bunker (15) zur Gemengeaufnahme vorhanden ist und daß in dem feuerfesten Material der Decke 18 als Öffnung ein an sich bekannter Schlitz oder statt des Schlitzes in verschiedenen radialen Abständen von der Drehachse angeordnete Öffnungen angeordnet sind.

2. Glasschmelzofen nach Anspruch 1, dadurch gekennzeichnet, daß ein zentraler konzentrisch auf der Decke angeordneter Trichter (4) eine exzentrisch neben der Drehachse und über der Aufgabe einer Verteilerrinne oder zwei zusammenwirkenden Verteilerrinnen oder Rohren (5) angeordnete Auslaßöffnung aufweist, daß der Abwurfpunkt der Verteilerrinne (n) oder Rohre (5) radial veränderbar ist und ein Schlitz oder Öffnungen in der Decke (18) vorhanden ist oder sind, der oder die über Zwischenförder- und Bunkermittel radial einstellbar mit Gemenge beschickt werden können.

3. Glasschmelzofen nach Anspruch 1 oder 2, gekennzeichnet durch eine ringförmige Schürze (22) der Decke (18), die mit einem Dichtrand (23) an oder in der Krone der Außenwandung (19) zusammenwirkt.

4. Glasschmelzofen nach Anspruch 3, dadurch gekennzeichnet, daß der Dichtrand (23) U-Form aufweist, mit einem fließ- oder rieselfähigem Dichtmittel (24) gefüllt ist und ein vertikal verlaufender Rand der Schürze (22) in das Dichtmittel (24) eingreift.

5. Glasschmelzofen nach Anspruch 1 bis 4, dadurch gekennzeichnet, daß die Träger (16) zusammengesetzt ein Dreieck bilden und das so geschaffene Dreieck in den Ecken Rollen oder Räder (10) aufweist, von denen mindestens eins angetrieben ist und die auf und an dem Rand der ringförmigen Fahrschiene (17) auf- oder anliegen.

6. Glasschmelzofen nach Anspruch 1 bis 5, gekennzeichnet durch einen außermittig an dem ortsfesten Stützgerüst (13) sitzenden Hauptgemengebunker (20), an dessen unteren Ende ein Dosier-Fördermittel (1) sitzt, dessen Abwurfpunkt über der oberen Öffnung des Trichters (4) liegt.

7. Glasschmelzofen nach einem der vorhergehenden Ansprüche, gekennzeichnet durch eine Anzahl von Wannenvorbunkern (15), deren obere Öffnung unterhalb der Bewegungsbahn des Abwurfpunktes der oder des Fördermittel(s) (5, 5a—5b) liegt und deren unteren Öffnungen über Trichter (8) mit je einem weiteren Fördermittel (9) in Verbindung stehen, das in den Schlitz oder die Öffnungen in der Decke (18) abwirft.

8. Glasschmelzofen nach Anspruch 1 bis 7, gekennzeichnet durch eine zentrale, konzentrisch zur Drehachse der Decke (18) angeordnete Stromzuführung (3), welche durch den Trichter (4) bis auf die Oberseite der Decke reicht.

9. Glasschmelzofen nach Anspruch 1 bis 8, dadurch gekennzeichnet, daß die Öffnungen und die ihnen zugeordneten Wannenvorbunker (15) auf einem sich radial erstreckenden Kreisbogensegment angeordnet sind, von dessen Mittelpunkt aus eine in einer Horizontalebene verdrehbare Vibrationsrinne (5b) zu ihnen führt, auf die in ihrem Drehpunkt ein Vibrationsrohr (5a) abwirft, und wobei auf das andere Ende des Vibrationsrohrs (5a) das Gemenge durch den Trichter (4) aufgegeben wird.

10. Glasschmelzofen nach Anspruch 1, dadurch gekennzeichnet, daß auf der sich drehenden Decke in einem konzentrisch zu deren Drehachse liegenden Kreis eine Anzahl von Trichtern (25) angeordnet ist, deren obere Öffnungen sich unterhalb des Abwurfpunktes des Fördermittels (1) hindurch drehen.

11. Glasschmelzofen nach Anspruch 10, dadurch gekennzeichnet, daß in der Drehdecke eine Anzahl von Öffnungen (28) vorliegt, in die jeweils Fördermittel (26) (Vibrationsrinnen) abwerfen, deren Aufgabeende unterhalb der unteren Öffnung jeder der Trichter (25) angeordnet ist.

12. Glasschmelzofen nach Anspruch 10 bis 11, gekennzeichnet durch das untere Ende der Trichter (25) und das Aufgabeende der Vibrationsrinnen (26) betrieblich verbindende Vibrationsrohre (27).

13. Glasschmelzofen nach Anspruch 10 bis 12, dadurch gekennzeichnet, daß die radiale Ausdehnung der Öffnungen (28) derart bemessen ist, daß während des Drehens der Decke der vom Rand jeder Öffnung (28) beschriebene Kreis an den vom Rand jeder benachbarten Öffnung (28) beschriebenen Kreis anstößt.

14. Glasschmelzofen nach Anspruch 10 bis 13, dadurch gekennzeichnet, daß die Trichter (25) einen Füllstandsanzeiger aufweisen, aufgrund dessen Signal eine Nachfüllung vorgenommen wird, wenn sich die obere Öffnung des betreffenden Trichters unterhalb des Abwurfpunktes des Fördermittels (1) befindet.

15. Glasschmelzofen nach Anspruch 10 bis 14, dadurch gekennzeichnet, daß die Trichter (25) sich an ihren oberen Öffnungen nach oben in einen gemeinsamen Füllring (31) fortsetzen, der von einem kreisförmigen, gegenüber dem Stützgerüst feststehenden Deckel (29) nach oben abgeschlossen ist, der beidseitig nach unten weisende Stege (30) aufweist, die von dem Füllring (31) Abstand aufweisen und diesen nach unten hin überlappen.

16. Glasschmelzofen nach Anspruch 10 bis 15, dadurch gekennzeichnet, daß der Füllring (31) beidseitig einen Randkanal (32) aufweist, der mit einem fließ- oder rieselfähigem Material (33) gefüllt ist, in das der Unterrand der Stege (30) hineinragt.

17. Glasschmelzofen nach Anspruch 10 bis 16, dadurch gekennzeichnet, daß zwischen dem Fördermittel (1) und dem Deckel (29) ein Fallrohr (34) vorhanden ist.

## Revendications

1. Four de fusion de verre, notamment four de fusion de verre à chauffage électrique intégral, comportant une paroi (19) en matière réfractaire qui a une forme de cercle ou de polygone régulier, et dans lequel il est prévu extérieurement une ossature d'appui (13), comportant un plancher (18) en matière réfractaire et des moyens transporteurs (1) pour introduire la charge dans un entonnoir (4) disposé sur le plancher (18), ainsi que des moyens transporteurs (5) pour une introduction commandée de la charge de cet entonnoir (4) dans une ouverture du plancher (18), caractérisé en ce que le plancher (18) est supporté par des tirants ou des supports (16) placés au-dessus et comporte des roues (10) se déplaçant sur un rail de forme annulaire (17) et par l'intermédiaire desquelles le plancher (18) peut être entraîné en rotation dans un plan horizontal, en ce qu'il est prévu sur ce plancher (18) une trémie (15) de distribution de la charge et en ce qu'il est prévu dans la matière réfractaire du plancher, comme ouverture, une fente de type connu ou bien, à la place de la fente, plusieurs ouvertures disposées à des distances radiales différentes de l'axe de rotation.

2. Four de fusion de verre selon la revendication 1, caractérisé en ce qu'un entonnoir (4) placé dans une position centrale concentriquement au plancher comporte une ouverture de décharge excentrée par rapport à l'axe de rotation et disposée de manière à alimenter une goulotte de distribution, ou bien deux goulottes de distribution coopérantes, ou bien des tubes (5) de manière que le point de déchargement de la ou des goulottes distributrices ou des tubes (5) puisse être modifié radialement, et en ce qu'il est prévu dans le plancher (18) une fente ou bien des ouvertures qui peuvent être alimentées en matière de charge, avec possibilité de réglage radial, par l'intermédiaire de moyens transporteurs intercalaires et de trémies.

3. Four de fusion de verre selon la revendication 1 ou 2, caractérisé en ce que le plancher (18) comporte un tablier annulaire (22) qui coopère avec un bord de'étanchéité (23) prévu sur ou dans la couronne de la paroi extérieure (19).

4. Four de fusion de verre selon la revendication 3, caractérisé en ce que le bord d'étanchéité (23) a une forme de U, est rempli d'un agent d'étanchéité (24) de nature fluide et en ce qu'un bord du tablier (22), orienté verticalement, pénètre dans l'agent d'étanchéité (24).

5. Four de fusion de verre selon l'une quelconque des revendications 1 à 4, caractérisé en ce que les supports (16) constituent ensemble une structure de forme triangulaire et en ce que cette structure triangulaire ainsi créée comporte en ses sommets des rouleaux ou des roues (10) dont l'un au moins est entraîné et qui s'appliquent par le haut et latéralement contre le bord du rail de forme annulaire (17).

6. Four de fusion de verre selon l'une quelconque des revendications 1 à 5, caractérisé en ce qu'il est prévu une trémie principale de chargement (20), montée dans une position excentrée sur l'ossature portante fixe (13) et qui est pourvue à son extrémité inférieure d'un transporteur de dosage (1) dont le point de déchargement est situé au-dessus de l'ouverture supérieure de l'entonnoir (4).

7. Four de fusion de verre selon l'une quelconque des revendications 1 à 6, caractérisé en ce qu'il comporte un certain nombre d'avant-trémies de chargement (15) dont l'ouverture supérieure est placée en dessous du trajet du point de déchargement du ou des moyens transporteurs (5, 5a-5b) et dont les ouvertures inférieures sont reliées, par l'intermédiaire d'entonnoirs (8), respectivement à un autre moyen transporteur (9) qui se décharge dans la fente ou dans les ouvertures ménagées dans le plancher (18).

8. four de fusion de verre selon l'une quelconque des revendications 1 à 7, caractérisé en ce qu'il est prévu une alimentation en courant (3) placée dans une position centrale et concentrique à l'axe de rotation (18), ladite alimentation en courant s'étendant au travers de l'entonnoir (4) jusqu'au côté supérieur du plancher.

9. Four de fusion de verre selon l'une quelconque des revendications 1 à 8, caractérisé en ce que les ouvertures et les avant-trémies de chargement associées (15) sont disposées sur un segment de cercle s'étendant radialement et dont le centre aboutit à une goulotte vibrante (5b), pouvant tourner dans un plan horizontal et dans laquelle se déverse, en son point de rotation, un tube vibrant (5a) et en ce que la charge est déversée par l'entonnoir (4) à l'autre extrèmité du tube vibrant (5a).

10. Four de fusion de verre selon la revendication 1, caractérisé en ce qu'il est prévu, sur le plancher tournant, un certain nombre d'entonnoirs (25) répartis sur un cercle concentrique à l'axe de rotation du plancher et dont les ouvertures supérieures tournent en dessous du point de déchargement du moyen transporteur (1).

11. Four de fusion de verre selon la revendication 10, caractérisé en ce qu'il est prévu dans le plancher tournant un certain nombre d'ouvertures (28) dans chacune desquelles se déverse la matière déchargée par des moyens transporteurs (26) (goulottes vibrantes), dont les extrémités de chargement sont situées en dessous de l'ouverture inférieure de chaque entonnoir correspondant (25).

12. Four de fusion de verre selon l'une des revendications 10 et 11, caractérisé en ce que l'extrémité inférieure des entonnoirs (25) et l'extrémité réceptrice des goulottes vibrants (26) sont reliées en service par des tubes vibrants (27).

13. Four de fusion de verre selon l'une quelconque des revendications 10 à 12, caractérisé en ce que l'étendue radiale des ouvertures (28) est dimensionnée de manière que, pendant la rotation du plancher, le cercle décrit par le bord de chaque ouverture (28) vienne rejoindre le cercle décrit par la bord de chaque ouverture adjacente (28).

14. Four de fusion de verre selon l'une quelconque des revendications 10 à 13, caractérisé en ce que les entonnoirs (25) comportent un indicateur de niveau de remplissage, qui produit un signal de commande d'un complément de remplissage lorsque l'ouverture supérieure de l'entonnoir correspondant est située en dessous du point de déchargement du moyen transporteur (1).

15. Four de fusion de verre selon l'une quelconque des revendications 10 à 14, caractérisé en ce que les entonnoirs (25) se prolongent vers le haut, dans la zone de leurs ouvertures supérieures, jusque dans un anneau de remplissage commun (31), qui est obturé supérieurement par un couvercle (29) de forme circulaire, fixe par rapport à l'ossature portante et qui est pourvu de chaque côté de voiles (30) dirigés vers le bas, espacés d'une certaine distance de l'anneau de remplissage (31) et qui recouvrent celui-ci vers le bas.

16. Four de fusion de verre selon l'une quelconque des revendications 10 à 15, caractérisé en ce que l'anneau de remplissage (31) comporte des deux côtés un canal latéral (32) qui est rempli d'une matiére de nature fluide (33), dans laquelle pénètre le bord inférieur du voile correspondant (30).

17. Four de fusion de verre selon l'une quelconque des revendications 10 à 16, caractérisé en ce qu'il est prévu un tuyau de descente (34) entre le moyen transporteur (1) et le couvercle (29).

**Claims**

1. A glass melting furnace, especially fully electrically heated glass melting furnace, comprising a wall (19) of a refractory material, said wall being of circular configuration or having the shape of a regular polygonal, and wherein an exterior supporting frame (13) is provided; further comprising a ceiling or roof (18) of refractory material, and conveyor means (1) for feeding the mixture (batch) into a hopper (4) mounted on said ceiling or roof (18), and further conveyor means (5) for the controlled feeding of the mixture from said hopper (4) into an opening formed in said ceiling or roof (18), characterized in that said ceiling or roof (18) is supported by superposed headers or beams (16) and includes wheels (10) adapted to travel along an annular guide rail (17), said roof (18) being adapted to be rotated in a horizontal plane by means of said wheels, and wherein a bin (15) for mixture reception is provided on said ceiling or roof (18); and that said refractory material of said ceiling or roof (18) has disposed therein as said opening, a known per se slot or, in the place of said slot, openings positioned in varying radial distances from the axis of rotation.

2. The glass melting furnace according to claim 1, characterized in that a central hopper (4) mounted concentrically on said ceiling or roof includes a discharge opening positioned eccentrically adjacent said axis of rotation and above the feeding point of a distributor chute or of a pair of cooperating distributor chutes or pipes (5), that the discharge position of said distributor chute(s) or pipes (5) is variable in radial direction, and that a slot or openings are provided in said ceiling or roof (18), which slot or apertures are adapted to be fed with mixture in radially variable fashion through intermediate conveyor or bin means.

3. The glass melting furnace according to claims 1 or 2, characterized by an annular skirt (22) of said ceiling or roof (18) cooperating with a sealing rim (23) at or in the crest of the exterior wall (19).

4. The glass melting furnace according to claim 3, characterized in that said sealing rim (23) is of U-shaped configuration and filled with a flowable sealing agent (24), with a vertically extending edge of said skirt (22) immersed into said sealing agent (24).

5. The glass melting furnace according to claims 1 to 4, characterized in that said beams, when assembled, define a triangle, and that the thus defined triangle includes rollers or wheels (10) at the corners thereof, at least one roller or wheel being driven, and said rollers or wheels resting on said annular guide rail (17) and contacting the (lateral) edge thereof.

6. The glass melting furnace according to claims 1 to 5, characterized by a main mixture bin (20) mounted in an eccentric position on said stationary supporting frame (13) and having at its lower end a metering conveyor element (1) the discharge point of which is disposed above the upper opening of said hopper (4).

7. The glass melting furnace according to any one of the preceding claims, characterized by a plurality of upstream tank bins (15) the upper openings of which are each disposed below the path of movement of said discharge point of said conveyor means (5, 5a to 5b) and the lower openings of which are each in communication with further conveyor means (9) adapted to discharge into said slot or openings formed in said ceiling or roof (18).

8. The glass melting furnace according to claims 1 to 7, characterized by central power supply means (3) positioned in concentric relation to the axis of rotation of said ceiling or roof (18) and extending through said hopper (4) down to the upper side of said ceiling or roof.

9. The glass melting furnace according to claims 1 to 8, characterized in that said openings and the associated upstream tank bins (15) are positioned on a radially extending segment of an arc, with a vibratory chute (5b) extending from the center point of said segment to said tank bins, said chute being fed at its pivot point by a vibratory pipe or tube (5a), and wherein the mixture is fed by said hopper (4) into the opposite end of said vibratory pipe (5a).

10. The glass melting furnace according to claim 1, characterized in that said rotatable ceiling or roof has disposed thereon on a circle concentric with its axis of rotation, a plurality of hoppers (25) the upper openings of which are each adapted to rotatively travel below the discharge point (position) of said conveyor means (1).

11. The glass melting furnace according to claim 10, characterized in that said rotary ceiling or roof is provided with a plurality of openings (28) which are each fed by conveyor means (26) (vibratory chutes) the feed ends of which are each disposed below the lower opening of each respective hopper (25).

12. The glass melting furnace according to claims 10 to 11, characterized by vibratory pipes or tubes (27) operationally interconnecting the lower end of hopper (25) to the feed of each vibratory chute (26).

13. The glass melting furnace according to claims 10 to 12, characterized in that the radial extension of said openings (28) is dimensioned such that, during rotation of said ceiling or roof, the circle described by the edge of each opening (28) is tatching to the circle described by the edge of each adjacent opening (28).

14. The glass melting furnace according to claims 10 to 13, characterized in that said hoppers (25) (each) include a filling level indicator for providing a signal in response to which said hoppers are supplied with further mixture when the upper opening of the respective hopper is located below the feed point of said conveyor means (1).

15. The glass melting furnace according to claims 10 to 14, characterized in that said hoppers (25) continue to extend upwards from their upper openings to form a common charging ring (31) having its upper side closed by a circular cover (29) being stationary with respect to said supporting frame and having on both sides thereof downwardly extending webs (30) which are spaced from said charging ring (31) and overlap the latter in downward direction.

16. The glass melting furnace according to claims 10 to 15, characterized in that said charging ring (31) includes on opposite sides thereof a peripheral channel (32) which is filled with a flowable material (33) into which the lower edges of said webs (30) extend.

17. The glass melting furnace according to claims 10 to 16, characterized in that a downcomer (34) is positioned between said conveyor means (1) and said cover (29).

Fig. 1

Fig. 2

Fig.4

Fig.5